# EUROPÄISCHE PATENTSCHRIFT

(11) **EP 2 125 464 B1**
(45) Veröffentlichungstag und Bekanntmachung des Hinweises auf die Patenterteilung: **16.10.2013**
(21) Anmeldenummer: 08707974.5
(22) Anmeldetag: 17.01.2008
(51) Int. Cl.: B60T 8/36, H02J 7/34, H02J 9/06

(54) **KRAFTFAHRZEUG-BORDNETZ**
MOTOR VEHICLE ELECTRIC SYSTEM
RÉSEAU DE BORD DE VÉHICULE À MOTEUR

(30) Priorität: 25.01.2007 DE 102007003711; 22.11.2007 DE 102007056363
(43) Veröffentlichungstag der Anmeldung: 02.12.2009
(73) Patentinhaber: Continental Teves AG & Co. OHG, 60488 Frankfurt (DE); Contitemic Microelectronic GmbH, 90411 Nürnberg (DE)
(72) Erfinder: FEY, Wolfgang, 65527 Niedernhausen (DE); FENDT, Günther, 86529 Schrobenhausen (DE); KULESCH, Manfred, 85049 Ingolstadt (DE)
(74) Vertreter: Brand, Markus
(86) Internationale Anmeldenummer: PCT/EP2008/050529
(87) Internationale Veröffentlichungsnummer: WO 2008/090082

(56) Entgegenhaltungen:
- EP-A- 1 302 371
- DE-A1- 4 242 177
- DE-A1- 10 059 949
- DE-A1- 10 200 343
- DE-A1- 19 755 050

## Beschreibung

Die Erfindung bezieht sich auf ein Kraftfahrzeug-Steuerungssystem mit einem ans Bordnetz angeschlossenen Spulenschalter.

Der Aufbau von existierenden Kraftfahrzeug-Steuererungssystem orientiert sich in der Regel an geforderten Sicherheitsaspekten. Dies bezieht sich in der Regel u. a. auf die Funktionalität der an das Kraftfahrzeug-Bordnetz angeschlossenen Komponenten im Autarkiefall, d. h. bei Abriss der Stromversorgung. Derartige Aspekte können insbesondere bei der Stromversorgung sicherheitsrelevanter Komponenten, wie beispielsweise von Airbag-Systemen, bedeutsam sein.

In der DE 102 00 343 A1 wird ein Wandler-System zur 12 und 24 Volt-Versorgung eines 24 Volt-Nutzfahrzeuganhänger-Antiblockiersystems beschrieben bei dem der ABS-Aufwärtswandler einen universellen Einsatz von 12 Volt-Zugfahrzeugen für bestehende 24 Volt-Anhängerkonzepte Lösungen möglich macht. Der Wandler kann mit 12 oder 24 Volt betrieben werden und liefert am Ausgang 24 Volt. Der Steuerteil und der Magnetventilteil des ABS-Systems werden durch separate Wandler versorgt und die Funktion der Fahrzeugerkennungseinheit bleibt uneingeschränkt erhalten.

In der Druckschrift DE 197 46 546 C1 ist beispielsweise ein Netzteil für ein Kraftfahrzeug-Bordnetz offenbart, welches geeignet ist, eine Autarkiefunktionalität, wie diese bei Airbagsystemen gefordert ist, zu erfüllen. Damit hierbei im Autarkiefall die Systemfunktionalität für eine gewisse geforderte Mindestzeit aufrechterhalten werden kann, wird in diesem bekannten System im Normalbetriebszustand ein Autarkiekondensator auf eine gegenüber der Bordnetzspannung erhöhte Spannung aufgeladen, wobei die Energie des Kondensators dann im Autarkiefall dem Eingang des Systems durch eine Schaltereinrichtung zur Verfügung gestellt wird.

Anders hingegen sind die Kraftfahrzeug-Schaltungsanordnung bei Bremssystemen, wie z. B. bei ABS-Systemen, realisiert, da bei einem Bremssystem üblicherweise keine Autarkiefunktionalität gefordert wird. Infolge der abweichenden Anforderungen werden gemäß dem Stand der Technik die Bremssysteme direkt von der Fahrzeug-Versorgung/Batteriespannung mit Energie versorgt, wobei wegen der möglichen Schwankungen der Bordnetz- oder Versorgungsspannung (6 V bis 16 V) die Systemelektronik entsprechend an diese gegebenen Bordnetz-schwankungen angepasst werden muss, um eine sichere Funktion zu gewährleisten. Dies bedeutet in der Praxis, dass bei der Systemauslegung nur von der niedrigsten Versorgungsspannung von ca. 6 V (Unterspannung) ausgegangen werden kann.

Als Nachteil einer solch letztgenannten Applikation ist zu werten, dass zum Steuern der Ventile des ABS-Systems über einen Spulenschalter relativ hohe von Halbleiterschaltern geschaltete Spulenströme bereitgestellt werden müssen, damit die zum Steuern der Magnetenventile erforderliche Energie an den Erregerspulen bereitgestellt werden kann. Durch die Verwendung von hohen Strömen im Steuerbetrieb kommt es dabei allerdings zu hohen Verlustleistungen in den Halbleiterbauelementen. Eine solche Verlustleistung im aktiven Steuerbetrieb führt zur Beeinträchtigung der Sicherheit und Zuverlässigkeit solcher Bremssysteme.

Der Erfindung liegt daher die Aufgabe zugrunde, ein Kraftfahrzeug-Steuerungssystem anzugeben, welches einen zuverlässigen Betrieb eines solchen Spulenschalters mit besonders gering gehaltener Verlustleistung in den Halbleiterschaltern ermöglicht.

Diese Aufgabe wird erfindungsgemäß gelöst, indem zwischen Bordnetz und Spulenschalter ein Aufwärtswandler geschaltet ist.

Die Erfindung geht dabei von der Überlegung aus, dass für einen zuverlässigen und sicheren Betrieb des Spulenschalters die Verlustleistungen in den Halbleiterschaltern reduziert werden sollten. Eine solche Reduzierung der Verlustleistung in den Halbleiterschaltern ist durch Verringerung des durch sie fließenden Stromes möglich. Zur Bereitstellung der zum Steuern der Magnetventile erforderlichen Energie bei geringeren Spulenströmen ist daher eine erhöhte angelegte Spannung notwendig. Da einerseits aus Gründen der Systemkompatibilität bei der Bordnetz-Versorgung auf etablierte Netzteile zurückgegriffen werden sollte und andererseits eine solche erhöhte Spannung aus der Bordnetzspannung wegen möglicher Schwankungen nicht direkt entnehmbar ist, ist daher dem Spulenschalter ein Aufwärtswandler zur Erhöhung der Bordnetzspannung vorgeschaltet.

Um ein ABS-System mit einer solchen erhöhten Spannung zu versorgen, ist in vorteilhafter Weise der Spulenschalter als ABS-Spulenschalter ausgelegt. Zur Verwendung des Spulenschalters bzw. des ABS-Bremssystems auch im Autarkiefall ist in besonders vorteilhafter Ausführung ein Pufferspeicher zwischen den Aufwärtswandler und den Spulenschalter geschaltet. Ein solcher Pufferspeicher erhöht dabei die betriebliche Sicherheit des ABS-Systems, da auch im Falle des Abrisses der Stromversorgung das ABS-System eine Zeit lang weiter verwendet werden kann und damit das Kraftfahrzeug weiterhin sicher gelenkt bzw. gebremst werden kann. Zusätzlich ist es dabei möglich, Sicherheitssysteme, welche eine Autarkiefunktionalität erfordern, wie beispielsweise das Airbagsystem, über den gleichen Versorgungsstrang wie das ABS-System anzuschließen. Durch den Pufferspeicher wird daher nicht nur die Autarkie des ABS-Bremssystems, sondern auch die weiterer Sicherheitskomponenten wie beispielsweise des Airbagsystems sichergestellt.

Zur Verwendung weiterer Endabnehmer mit niedrigerer Eingangsspannung ist in vorteilhafter Weise dem Aufwärtswandler ein Abwärtswandler nachgeschaltet. Dabei hängt es von der Autarkiefunktionalität der zugeschalteten Komponenten ab, ob der Abwärtswandler vor oder hinter den Pufferspeicher geschaltet ist. Beide Möglichkeiten sind je nach Verwendungszweck denkbar. An den Abwärtswandler könnten dabei beispielsweise weitere Längsregler zur Erzeugung einer stabilisierten Arbeitsspannung oder Sensoren zur Messung der Arbeitsspannung angeschlossen sein. Dabei ist es auch möglich, dass die Ausgangsspannungen des Abwärtswandlers je nach Verwendungszweck ein unterschiedliches Spannungspotential aufweisen.

In besonders vorteilhafter Ausführung wird ein solches Kraftfahrzeug-Steuerungssystem mit dafür vorgesehenen Steuerspulen und Spulenschaltern in einem ABS-System eines Kraftfahrzeuges verwendet.

Die mit der Erfindung erzielten Vorteile bestehen insbesondere darin, dass durch die Zwischenschaltung eines Aufwärtswandlers zwischen Bordnetz und Spulenschalter eine Reduzierung des Spulenstroms bei gleich bleibender bereitgestellter Energie zur Steuerung der Magnetventile erreicht wird. Weiterhin wird die Induktivität der Spule sowie die Verlustleistung in den Halbleiterschaltern reduziert, welches eine erhöhte Sicherheit und Zuverlässigkeit im Betrieb des Spulenschalters ermöglicht. Weiterhin wird infolge der reduzierten Ströme erreicht, dass die Magnetventilspulen geringer dimensioniert und somit kompakter gebaut werden können. Durch die Verwendung eines Pufferspeichers zur Bereitstellung der Spannung auch im Autarkiefall, d. h. bei Abreißen der Stromversorgung, wird die Unabhängigkeit des Spulenstroms von der Bordnetz-Versorgungsspannung bzw. von dessen Schwankungen erreicht. Des Weiteren ist eine hohe Sicherheit gegenüber Störimpulsen durch die Bordnetz-Versorgungsspannung gegeben.

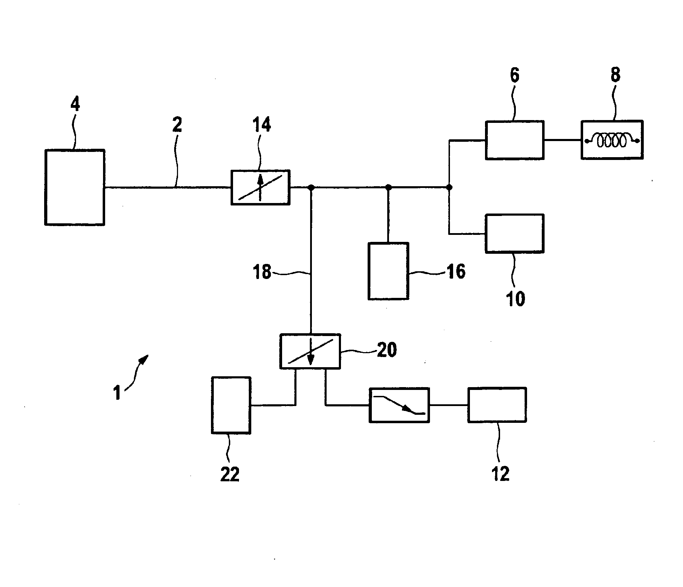

Ein Ausführungsbeispiel der Erfindung wird anhand einer Zeichnung näher erläutert. Darin zeigt die Figur ein Kraftfahrzeug-Steuerungssystem.

Das Steuerungssystem 1 eines Kraftfahrzeugs gemäß der Figur umfasst zur Versorgung einer Anzahl von Verbrauchern, wie beispielsweise Schalter, Sensoren oder dergleichen, eine Versorgungsschiene 2, die eingangsseitig an das Bordnetz 4, beispielsweise an die Kraftfahrzeug-Batterie, und dabei insbesondere an deren Pluspol mit entsprechend anliegender Versorgungsspannung (auch als Klemme 15/30 bezeichnet) angeschlossen ist. Als zu versorgende Verbraucher sind dabei an die Versorgungsschiene 2 ein Spulenschalter 6 eines nachgeschalteten ABS-Systems, für das beispielhaft eine Steuerspule 8 dargestellt ist, ein Airbag-System 10 sowie eine Anzahl weiterer, nicht näher spezifizierter Regulatoren 12 angeschlossen. Zur Aktivierung des ABS-Systems wird über den Spulenschalter 6, der im Ausführungsbeispiel als Halbleiterschalter ausgebildet ist, der Spulenstrom für die nachgeschaltete Spule 8 geschaltet, so dass die dieser nachgeschalteten Steuereinheiten oder Magnetventile aktiv werden.

Das Kraftfahrzeug-Steuerungssystem 1 ist für eine besonders hohe betriebliche Zuverlässigkeit bei der Ansteuerung des Spulenschalters 6 ausgelegt, wobei eine besonders gering gehaltene Verlustleistung in dem jeweiligen Halbleiterschalter gewährleistet sein soll. Des Weiteren ist bei der Auslegung des Kraftfahrzeug-Steuerungssystem 1 eine besonders geringe Empfindlichkeit des Spulenstroms gegenüber Schwankungen der Bordnetz-Versorgungsspannung oder gegenüber Störimpulsen aus der Bordnetz-Versorgungsspannung angestrebt. Um dies zu erreichen, ist das Kraftfahrzeug-Steuerungssystem 1 für eine Beaufschlagung des Spulenschalters 6 mit einem besonders gering gehaltenen Spulenstrom vorgesehen, wodurch im Übrigen auch eine besonders kompakt gehaltene Bauweise der einzelnen Komponenten ermöglicht wird. Um bei dieser Auslegung dennoch die zum Ansteuern der Magnetventile erforderliche Schaltenergie zuverlässig bereitstellen zu können, ist der Spulenschalter 6 zusätzlich zur Auslegung für vergleichsweise gering gehaltene Spulenströme für eine Beaufschlagung mit einer im Vergleich zur Versorgungsspannung hoch gesetzten Eingangsspannung ausgestaltet. Dementsprechend ist im Kraftfahrzeug-Steuerungssystem 1 der Spulenschalter an die Versorgungsschiene 2 und somit das Bordnetz 4 unter Zwischenschaltung eines Aufwärtswandlers 14 angeschlossen.

Dabei ist es denkbar, dass sich zusätzlich zu dem in Reihe zwischen dem Bordnetz 4 und dem Spulenschalter 6 befindlichen Aufwärtswandler 14 weitere Komponenten parallel oder in Serie zum Aufwärtswandler 14 befinden. Eine derartige Komponente sei beispielsweise eine Diode, welche aus Gründen des Verpolschutzes zusätzlich in Reihe zwischen dem Bordnetz 4 und dem Spulenschalter 6 geschaltet sein kann.

Der Aufwärtswandler 14 wandelt dabei die vom Bordnetz über die Versorgungsschiene 2 zur Verfügung gestellte Versorgungsspannung auf eine höhere Spannung, mit der der Spulenschalter 6 aus den genannten Gründen beaufschlagt wird. Um dabei eine noch weiter erhöhte betriebliche Sicherheit selbst für den Fall eines vorübergehenden Ausfalls der Spannungsversorgung, den so genannten Autarkiefall, zu gewährleisten, ist zusätzlich zwischen den Aufwärtswandler 14 und den Spulenschalter 6 ein Energie- oder Pufferspeicher 16 geschaltet, in dem die im Aufwärtswandler 14 erhöhte Versorgungsspannung zwischengespeichert werden kann. Durch die Zwischenschaltung des Pufferspeichers 16 können somit auch besonders sicherheitsrelevante und Autarkiekriterien unterliegende Systeme wie beispielsweise das Airbag-System 10 mit der über den Aufwärtswandler 14 hoch gesetzten Versorgungsspannung beaufschlagt werden. Damit werden im Kraftfahrzeug-Steuerungssystem 1 von der über den Aufwärtswandler 14 höher gewandelten Versorgungsspannung die Systemfunktionalitäten wie das Airbagsystem 10 und das dem Spulenschalter 6 nachgeschaltete ABS-System mit Energie versorgt, wobei im normalen Betriebsfall der Energiebedarf dieser System unmittelbar durch den Aufwärtswandler 14 nachgeregelt wird. Am Pufferspeicher 16 bleibt daher im normalen Betriebsfall eine nahezu konstante Versorgungsspannung bestehen. Im Autarkiefall, also bei Abriss der Versorgungsspannung, kann bei einer derartigen Auslegung das Airbag-System 10 über den Pufferspeicher 16 noch weiter mit Energie versorgt werden, so dass dessen Funktionalität noch für eine gewisse geforderte Mindestzeit nach dem Ausfall der Versorgungsspannung gewährleistet ist. Durch diese Ausgestaltung, also insbesondere durch die zusätzliche Zwischenschaltung des Pufferspeichers 16, ist somit eine kombinierte Spannungsversorgung für die genannten Kraftfahrzeug-Sicherheitssysteme mit vergleichsweise hoch gesetzter Versorgungsspannung gegeben.

Über eine Zweigleitung 18 ist eine Anzahl weiterer Verbraucher 12 an die Versorgungsschiene 2 angeschlossen, wobei die Zweigleitung 18 im Versorgungsstrang nach dem Aufwärtswandler 14 abzweigt. Um dabei eine Versorgung weiterer Verbraucher in der Art einer herkömmlichen Spannungsversorgung zu ermöglichen, ist an die Zweigleitung 18, die im Übrigen auch vom Pufferspeicher 16 gepuffert ist, ein Abwärtswandler 20 angeschlossen, dem die weiteren Verbraucher nachgeschaltet sind. Am Ausgang des Abwärtswandlers 20 können beispielsweise Längsregler zur Erzeugung einer stabilisierten Arbeitsspannung, beispielsweise für die Logik oder den Mikroprozessor der Kraftfahrzeug-Elektronik, angeschlossen sein. Des Weiteren ist an den Abwärtswandler 20 ausgangsseitig ein Sensor 22 zur Überwachung der Ausgangsspannung angeschlossen.

### Bezugszeichenliste

- 1: Kraftfahrzeug-Steuerungssystem
- 2: Versorgungsschiene
- 4: Bordnetz
- 6: Spulenschalter
- 8: Steuerspule / Spule
- 10: Airbag-System
- 12: Regulatoren / Verbraucher
- 14: Abwärtswandler
- 16: Pufferspeicher
- 18: Zweigleitung
- 20: Abwärtswandler
- 22: Sensor

## Patentansprüche

1. Kraftfahrzeug-Steuerungssystem (1) mit einem ans Bordnetz (4) angeschlossenen Spulenschalter (6), wobei zwischen Bordnetz (4) und Spulenschalter (6) ein Aufwärtswandler (14) geschaltet ist, wobei zwischen den Aufwärtswandler (14) und den Spulenschalter (6) ein Pufferspeicher (16) geschaltet ist, welcher derart ausgelegt ist, **dadurch gekennzeichnet, dass** sicherheitsrelevante und Autarkiekriterien unterliegende Systeme über den Pufferspeicher im Autarkiefall, also bei Abriss der Versorgungsspannung, noch weiter mit Energie versorgt werden, so dass deren Funktionalität noch für eine gewisse geforderte Mindestzeit nach dem Ausfall der Versorgungsspannung gewährleistet ist.

2. Kraftfahrzeug-Steuerungssystem (1) nach Anspruch 1, wobei der Spulenschalter (6) ein ABS-Spulenschalter ist.

3. Kraftfahrzeug-Steuerungssystem (1) nach Anspruch 1 bis 2, wobei dem Aufwärtswandler (14) ein Abwärtswandler (20) nachgeschaltet ist.

4. Steuerspule (8), insbesondere eine Magnetventilspule, für ein ABS-System mit einem zugeordneten Spulenschalter (6), wobei die Steuerspule zum Betrieb in einem Kraftfahrzeug-Steuerungssystem nach einem der Ansprüche 1 bis 3 ausgelegt ist.

5. Spulenschalter (6) für eine Steuerspule (8) nach Anspruch 4, wobei der Spulenschalter (6) für den Betrieb mit gering gehaltenen Spulenströmen bei einer im Vergleich zur Bordnetz-Versorgungsspannung hoch gesetzten Eingangspannung ausgelegt ist.

6. ABS-System für ein Kraftfahrzeug mit einem KraftfahrzeugSteuersystem (1) nach einem der Ansprüche 1 bis 3 und/oder einer Anzahl von Steuerspulen (8) nach Anspruch 4 und/oder einer Anzahl von Spulenschaltern (6) nach Anspruch 5.

7. Kraftfahrzeug mit einem ABS-System nach Anspruch 6.

## Claims

1. Motor vehicle control system (1) having a coil switch (6) which is connected to the vehicle electric system (4), wherein a step-up converter (14) is connected between the vehicle electric system (4) and the coil switch (6), wherein a buffer accumulator (16) is connected between the step-up converter (14) and the coil switch (6), **characterized in that** systems which are relevant in terms of safety and are subject to autonomy criteria continue to be supplied with energy by means of the buffer accumulator in the case of autonomy, that is to say in the event of the supply voltage being disconnected, with the result that their functionality is still ensured for a certain required minimum time after the failure of the supply voltage.

2. Motor vehicle control system (1) according to Claim 1, wherein the coil switch (6) is an ABS coil switch.

3. Motor vehicle control system (1) according to Claims 1 to 2, wherein a step-down converter (20) is connected downstream of the step-up converter (14).

4. Control coil (8), in particular a solenoid valve coil, for an ABS system having an assigned coil switch (6), wherein the control coil is configured for operation in a motor vehicle control system according to one of Claims 1 to 3.

5. Coil switch (6) for a control coil (8) according to Claim 4, wherein the coil switch (6) is configured for operation with coil currents which are kept low when there is an input voltage which is stepped up compared to the supply voltage of the vehicle electric system.

6. ABS system for a motor vehicle having a motor vehicle control system (1) according to one of Claims 1 to 3 and/or a number of control coils (8) according to Claim 4 and/or a number of coil switches (6) according to Claim 5.

7. Motor vehicle having an ABS system according to Claim 6.

## Revendications

1. Système de commande (1) d'un véhicule automobile, comprenant un commutateur à bobine (6) raccordé au réseau de bord (4), un convertisseur amont (14) étant branché entre le réseau de bord (4) et le commutateur à bobine (6), un accumulateur tampon (16) étant branché entre le convertisseur amont (14) et le commutateur à bobine (6), **caractérisé en ce que** des systèmes asservis concernant la sécurité et des critères autarciques continuent d'être alimentés en énergie par le biais de l'accumulateur tampon en cas de fonctionnement autarcique, c'est-à-dire en cas de coupure de la tension d'alimentation, de telle sorte que leur fonctionnalité soit encore assurée pendant un certain temps minimum requis après la panne de tension d'alimentation.

2. Système de commande (1) d'un véhicule automobile selon la revendication 1, dans lequel le commutateur à bobine (6) est un commutateur à bobine d'ABS.

3. Système de commande (1) d'un véhicule automobile selon la revendication 1 ou 2, dans lequel le convertisseur amont (14) est placé en amont d'un convertisseur aval (20).

4. Bobine de commande (8), en particulier bobine d'électrovanne, pour un système d'ABS avec un commutateur à bobine associé (6), la bobine de commande étant conçue pour fonctionner dans un système de commande d'un véhicule automobile selon l'une quelconque des revendications 1 à 3.

5. Commutateur à bobine (6) pour une bobine de commande (8) selon la revendication 4, dans lequel le commutateur à bobine (6) est conçu pour fonctionner avec des courants de bobine faibles dans le cas d'une tension d'entrée élevée par rapport à la tension d'alimentation du réseau de bord.

6. Système d'ABS pour un véhicule automobile comprenant un système de commande (1) pour un véhicule automobile selon l'une quelconque des revendications 1 à 3 et/ou un certain nombre de bobines de commande (8) selon la revendication 4, et/ou un certain nombre de commutateurs à bobine (6) selon la revendication 5.

7. Véhicule automobile comprenant un système d'ABS selon la revendication 6.
